# EUROPEAN PATENT SPECIFICATION

(11) **EP 1 705 891 B1**
(45) Date of publication and mention of the grant of the patent: **19.02.2014**
(21) Application number: 05290653.4
(22) Date of filing: 24.03.2005
(51) Int. Cl.: H04N 1/04, H04N 1/10

(54) **Driving device for scanner**
Antriebsvorrichtung für Abtaster
Dispositif d'entraînement pour balayeur

(43) Date of publication of application: 27.09.2006
(73) Proprietor: SAGEMCOM DOCUMENTS SAS, 92500 Rueil Malmaison (FR)
(72) Inventor: Potakowskyj, Christoph, 1100 Wien (AT)
(74) Representative: Gibler, Ferdinand

(56) References cited:
- US-A- 6 091 516
- US-A1- 2001 043 371

## Description

The present invention relates to a system for driving and guiding a bar, particularly a reading bar of a scanner, the bar being drivable using a belt drive along a movement direction transverse to the longitudinal direction of the bar.

In known systems of this type, the bar is typically guided at its edges using guide devices, such as toothed racks.

It is necessary in this case to align the guide devices at the edges in relation to one another. The bar is typically pressed against a glass plate in operation, due to which a counterforce must be applied by the guide. Particularly because of thermally caused deformations and/or dirt, constraining forces may cause a permanent deformation of these guides as a result of a slight play.

The object of the present invention is to specify a drive of the type cited at the beginning in which the known disadvantages are avoided, which has a simple construction, adequate precision, and only slight play, whose precision is essentially constant over its service life, and which may be manufactured simply and cost-effectively.

This is achieved according to the present invention in that the belt drive engages at two suspension points of the bar, which are offset in the longitudinal direction of the bar, while implementing a torque, and the bar comprises guide elements, the guide elements being positioned offset in the direction of motion and engaging on different sides of a guide strip positioned in the direction of motion due to the torque.

It is advantageous in this case that, in addition to moving the bar, the belt drive is also used for aligning the bar in relation to the guide strip, through which an especially simple design of the drive is achieved. The guide strip is positioned essentially perpendicularly to the area passed over by the bar, because of which a load of the bar in this direction does not cause deformation of the guide strip. Due to the non-positive alignment of the bar, the bar may possibly twist against the direction of force, permanent deformation of the drive being avoided even if the bar is temporarily caught because of dirt or the like.

In a refinement of the present invention, a tension element, particularly a spring element, may be assigned to at least one of the suspension points. Through the tension element, it may be ensured easily that the belt drive is always loaded with a tensile force and a torque is applied to the bar.

According to another embodiment of the present invention, the belt drive may comprise at least one spring-loaded deflection pulley. Through the spring-loaded deflection pulley, it may be ensured that the belt drive is always loaded with a tensile force and a torque is applied to the bar.

In a further embodiment of the present invention, at least one of the guide elements may comprise a caster. Through the caster, the friction of the guide elements may be kept low and uniform motion of the bar may be ensured.

In a refinement of the present invention, at least one of the guide elements may have a spacer element projecting from the bar. Through the spacer element, the spacing of the guide elements may be selected largely independently of the dimension of the bar, the contact pressures arising between the guide strip and the guide elements particularly being a function of this spacing.

According to a further embodiment of the present invention, the guide strip may be positioned in the housing and connected in one piece to the housing, through which the manufacturing costs may be kept especially low. The guiding occurs nearly exclusively via the guide strip, because of which special requirements in regard to precision are only required on the guide strip even during manufacturing.

According to a further embodiment of the present invention, the bar may comprise at least one support roller for rolling on a running surface. Forces may be transmitted from the bar by the support roller independently from the guide strip, through which the strain of the guide may be kept low.

The present invention will be described in greater detail with reference to the attached drawing, in which embodiments are shown.

Figure 1 shows an oblique view of a housing of a scanner having a drive according to the present invention; and

Figure 2 shows a top view of the housing shown in Figure 1.

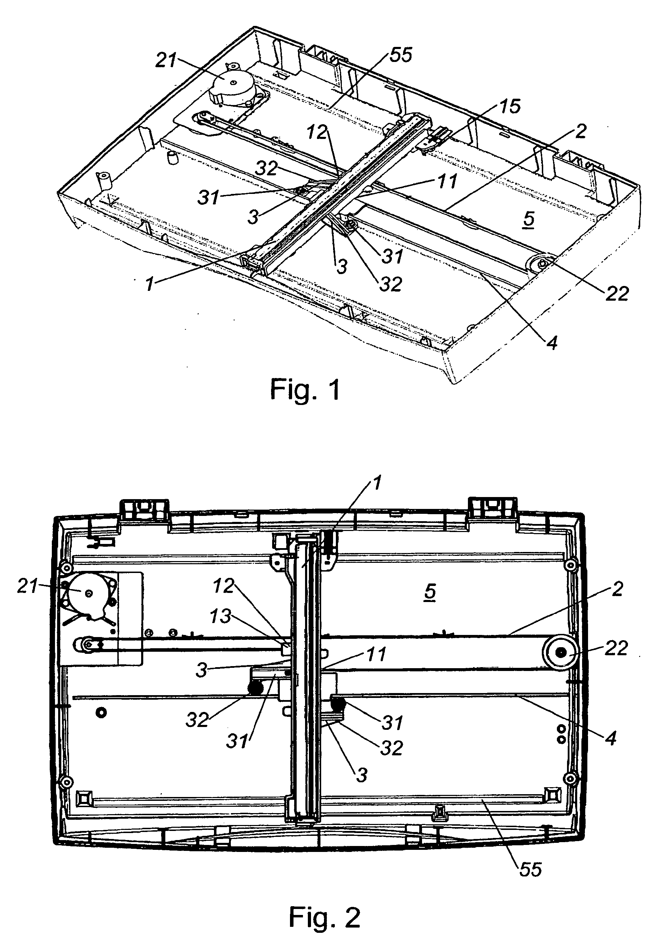

Figures 1 and 2 show a system according to the present invention for driving and guiding a bar 1. The bar 1 is drivable using a belt drive 2 along a direction of motion transverse to the longitudinal direction of the bar 1. The drive is especially suitable for a reading bar of a scanner. In this case, the drive must have an adequate precision, corresponding to the resolution of the scanner, because of which guiding of the bar 1 essentially without play is necessary.

In the drive, the belt drive 2 engages on two suspension points 11, 12 of the bar 1, which are offset in the longitudinal direction of the bar 1, to implement a torque, the belt drive 2 having a tensile load applied to it. The torque is essentially a function of the perpendicular spacing of the suspension points 11, 12 and the force applied by the belt drive 2. Furthermore, the bar 1 comprises guide elements 3, the guide elements 3 being positioned offset in the direction of motion and engaging due to the torque on different sides of a guide strip 4 positioned in the direction of motion. In this drive, the belt drive 2 is used not only for the motion in the direction of motion, but rather also for aligning the bar 1 on the guide strip 4.

A tensile force of the belt drive may be ensured easily if a tension element 13, which may particularly be a spring element, is assigned to at least one of the suspension points 11, 12. The tension element 13 may easily be connected on one end to one end of the belt drive and on the other end to one of the suspension points 11.

In another embodiment, the belt drive 2 may comprise at least one spring-loaded deflection pulley 22. A minimum tensile force in the belt drive 2 and thus the torque may also be ensured through the deflection pulley. The tensile force may also be applied by the drive unit 21.

In the embodiment shown, the guide strip 4 is implemented in one piece. In other embodiments, the guide strip 4 may also comprise multiple partial strips, for example, two essentially parallel partial strips, the guide elements 3 each engaging on one side of the partial strips.

The guide strip 4 may be positioned in the central third, particularly approximately in the middle, of the bar 1.

The bar may be twisted in relation to the guide strip 4 and is held in a stop position by the torque. If it is positioned centrally, the bar 1 has a slight resistance torque to the twisting in relation to the guide strip 4, inertial effects being kept small.

Displacement of the bar 1 along the guide strip 4 may be implemented with especially low friction if at least one of the guide elements 3 comprises a caster 31. Especially uniform motion of the bar 1 along the guide strip 4 may be ensured by the caster 31.

The guide elements 3 may have spacer elements 32 projecting from the bar 1. Using the spacer elements 32, the spacing of the engagement points on the guide strip 4 may be selected largely independently of the dimensioning of the bar 1. Secure and precise alignment of the bar 1 may be ensured in this case. In other embodiments, only one of the guide elements 3 may have a spacer element 32.

The guide strip 4 is typically positioned in a housing 5. In this case, it may be implemented as an independent component and attached in the housing 5. In other embodiments, the guide strip 4 may be connected in one piece to the housing 5, the housing 5 able to be implemented with the guide strip 4 as an injection molded part or the like. The guide strip 4 may essentially form a T-shaped profile with the adjoining part of the housing 5, high stability and strength of the guide strip 4 being achieved.

Furthermore, the bar 1 may comprise at least one support roller 15 which may roll on a running surface 55, the running surface 55 able to be connected in one piece to the housing 5. The support roller 15 may be provided in this case for force transmission and/or damping of any oscillations of the bar 1. Guiding of the bar 1 via the support roller 15 is not necessary.

If the system according to the present invention is used for the drive in a scanner, the bar 1 may be guided below a glass pane, the implementation of a contact force between the bar 1 and the glass pane being provided, so that a predefinable spacing between the read unit and the glass pane is ensured. A contact force in this type may be transmitted easily by the support roller 15 to the housing 5.

## Claims

1. A system for driving and guiding a bar (1), particularly a read bar of a scanner, the bar (1) being drivable using a belt drive (2) along a direction of motion transverse to the longitudinal direction of the bar (1),
**characterized in that** the belt drive (2) engages on two suspension points (11, 12) of the bar (1), which are offset in the longitudinal direction of the bar (1), to implement a torque, and the bar (1) comprises guide elements (3), the guide elements (3) being positioned offset in the direction of motion and engaging due to the torque on different sides of a guide strip (4) positioned in the direction of motion.

2. The system according to Claim 1,
**characterized in that** a tension element (13), particularly a spring element, is assigned to at least one of the suspension points (11, 12).

3. The system according to Claim 1 or 2,
**characterized in that** the belt drive (2) comprises at least one spring-loaded deflection pulley (22).

4. The system according to Claim 1, 2, or 3,
**characterized in that** at least one of the guide elements (3) comprises a caster (31).

5. The system according to one of Claims 1 through 4,
**characterized in that** at least one of the guide elements (3) has a spacer element (32) projecting from the bar (1).

6. The system according to one of Claims 1 through 5,
**characterized in that** the guide strip (4) is positioned in a housing (5) and connected in one piece to the housing (5).

7. The system according to one of Claims 1 through 6,
**characterized in that** the bar (1) comprises at least one support roller (15) for rolling on a running surface (55).

## Patentansprüche

1. System zum Antreiben und Führen eines Stabs (1), insbesondere eines Lesestabs eines Scanners, wobei der Stab (1) mittels eines Riemenantriebs (2) entlang einer Bewegungsrichtung quer zur Längsrichtung des Stabs (1) angetrieben werden kann,
**dadurch gekennzeichnet, dass** der Riemenantrieb (2) an zwei Aufhängepunkten (11, 12) des Stabs (1) eingreift, die in der Längsrichtung des Stabs (1) versetzt sind, um ein Drehmoment anzubringen, und dass der Stab (1) Führungselemente (3) umfasst, wobei die Führungselemente (3) in der Bewegungsrichtung versetzt angeordnet sind und aufgrund des Drehmoments an unterschiedlichen Seiten einer in der Bewegungsrichtung angeordneten Führungsleiste (4) eingreifen.

2. System nach Anspruch 1,
**dadurch gekennzeichnet, dass** ein Spannungselement (13), insbesondere ein Federelement, wenigstens einem der Aufhängepunkte (11, 12) zugeordnet ist.

3. System nach Anspruch 1 oder 2,
**dadurch gekennzeichnet, dass** der Riemenantrieb (2) wenigstens eine federbelastete Umlenkscheibe (22) umfasst.

4. System nach Anspruch 1, 2 oder 3,
**dadurch gekennzeichnet, dass** wenigstens eines der Führungselemente (3) eine Laufrolle (31) umfasst.

5. System nach einem der Ansprüche 1 bis 4,
**dadurch gekennzeichnet, dass** wenigstens eines der Führungselemente (3) ein Abstandselement (32) umfasst, das vom Stab (1) vorragt.

6. System nach einem der Ansprüche 1 bis 5,
**dadurch gekennzeichnet, dass** die Führungsleiste (4) in einem Gehäuse (5) angeordnet ist und einstückig mit dem Gehäuse (5) verbunden ist.

7. System nach einem der Ansprüche 1 bis 6,
**dadurch gekennzeichnet, dass** der Stab (1) wenigstens eine Tragrolle (15) zum Rollen auf einer Lauffläche (55) umfasst.

## Revendications

1. Un système pour conduire et guider une barre (1), en particulier une barre de lecture d'un scanner, la barre (1) pouvant être conduite à l'aide d'une transmission par courroie (2) le long d'un sens de mouvement transversal au sens longitudinal de la barre (1), **caractérisé en ce que** la transmission par courroie (2) s'engage sur deux points de suspension (11, 12) de la barre (1), qui sont compensés dans le sens longitudinal de la barre (1), pour mettre en place un couple de serrage, et la barre (1) comprend des éléments de guidage (3), les éléments de guidage (3) étant positionnés pour compenser dans le sens du mouvement et s'engageant à cause du couple de serrage sur différents côtés d'une bande de guidage (4) positionnée dans le sens du mouvement.

2. Le système selon la revendication 1
**Caractérisé en ce qu'**un élément de tension (13), en particulier un élément à ressort, est attribué à au moins un des points de suspension (11, 12).

3. Le système selon la revendication 1 ou 2,
**Caractérisé en ce que** la courroie de transmission (2) comprend au moins une poulie de déflection chargée par ressort (22).

4. Le système selon la revendication 1, 2 ou 3,
**Caractérisé en ce qu'**au moins l'un des éléments de guidage (3) comprend une roulette (31).

5. Le système selon l'une des revendications 1 à 4, **caractérisé en ce qu'**au moins un des éléments de guidage (3) possède un élément d'entretoise (32) ressortant de la barre (1).

6. Le système selon l'une des revendications 1 à 5, **caractérisé en ce que** la bande de guidage (4) est positionnée dans un boîtier (5) et connectée dans une pièce au boîtier (5).

7. Le système selon l'une des revendications 1 à 6, **caractérisé en ce que** la barre (1) comprend au moins un rouleau de support (15) pour rouler sur une surface de roulement (55).
